# DEMANDE DE BREVET EUROPEEN

(11) **EP 4 451 628 A1**
(43) Date de publication de la demande: **23.10.2024**
(21) Numéro de dépôt: 24169023.9
(22) Date de dépôt: 08.04.2024
(51) Int. Cl.: H04L 25/02, H04L 12/40

(54) **DISPOSITIF POUR BUS CAN**

(30) Priorité: 19.04.2023 FR 2303890
(71) Demandeur: STMicroelectronics International N.V., 1228 Plan-les-Ouates, Geneva (CH)
(72) Inventeur: MOENECLAEY, Nicolas, 38210 Vourey (FR); TROUSSEL, Gilles, 38000 Grenoble (FR); TOURNIOL, Christophe, 38450 Le Gua (FR)
(74) Mandataire: Cabinet Beaumont

(57) **Abrégé**

La présente description concerne un dispositif (SIC-DEV) comprenant des première et deuxième bornes connectées à un bus, et des troisième et quatrième bornes connectées à des potentiels d'alimentation et de référence (VDD, GND). Un premier transistor (T1) et une première résistance (R1) sont en série entre la première borne (302) et une première diode connectée à la troisième borne (304). Une deuxième résistance (R2), un deuxième transistor (T2) et une deuxième diode (D2) sont en série entre les première et quatrième bornes (302, 306). Un troisième transistor (T3) et une troisième résistance (R3) sont en série entre la première diode et la deuxième borne (300) . Une quatrième résistance (R4), un quatrième transistor (T4) et une troisième diode (D4) sont en série entre les deuxième et quatrième bornes (300, 306). A chaque transmission d'un bit dominant et d'un bit récessif, un circuit (CMD) met les transistors à l'état passant pendant une durée débutant avec le bit récessif.

## Description

### Domaine technique

La présente description concerne de façon générale les circuits électroniques, et, plus particulièrement les circuits électroniques destinés à être connectés à un bus bifilaire pour communiquer.

### Technique antérieure

De nombreux bus bifilaires sont connus. L'un de ces bus bifilaires connus est le bus CAN ("Controller Area Network" - réseau de zone de contrôleur), par exemple normalisé par la norme ISO 11898. Dans sa version FD ("Flex Datarate" - taux de données flexible), la vitesse du bus est différente entre les phases de transmission de données et les phases d'arbitrage et d'acquittement.

Des évolutions récentes ont introduit des contraintes dans les réseaux basés sur des bus CAN FD, ces contraintes portants, par exemple, sur la suppression d'oscillation des signaux transmis sur le bus CAN FD d'un réseau, par exemple un réseau complexe avec une topologie en étoile. Lorsque les dispositifs d'émission/réception connectés à un bus CAN FD respectent ces contraintes, par exemple définies dans le document "CiA 601-4" disponible à l'adresse "www.cancia.org/groups/specifications", le bus est, par exemple, qualifié de bus CAN FD SIC ("Bus CAN FD Signal Improvement Capability" - Bus CAN FD à capacité d'amélioration de signal).

Toutefois, les dispositifs d'émission et/ou de réception connus destinés à être connectés à un bus bifilaire CAN FD SIC présentent divers inconvénients, par exemple en ce qui concerne le respect des contraintes SIC.

### Résumé de l'invention

Il existe un besoin de pallier tout ou partie des inconvénients des dispositifs connus d'émission et/ou réception destinés à être connectés à un bus bifilaire série sur lequel sont transmis des bits dominants et des bits récessifs, par exemple un bus CAN FD.

Par exemple, il existe un besoin de pallier, dans ces dispositifs connus, tout ou partie des inconvénients liés à la suppression d'oscillation sur le bus, par exemple de sorte à respecter les contraintes CAN FD SIC.

Un mode de réalisation pallie tout ou partie des inconvénients des dispositifs connus d'émission et/ou réception destinés à être connectés à un bus bifilaire série sur lequel sont transmis des bits dominants et des bits récessifs, par exemple un bus CAN FD.

Par exemple, un mode de réalisation pallie tout ou partie des inconvénients de ces dispositifs connus en ce qui concerne la suppression d'oscillation sur le bus, par exemple de sorte à respecter les contraintes CAN FD SIC.

Un mode de réalisation prévoit un dispositif comprenant :
des première et deuxième bornes destinées à être connectées respectivement à des première et deuxième lignes d'un bus bifilaire ;
des troisième et quatrième bornes destinées à être connectées respectivement à des potentiels d'alimentation et de référence ;
une première diode ayant une première électrode connectée à la troisième borne ;
une première branche comprenant un premier transistor PMOS et
une première résistance en série entre une deuxième électrode de la première diode et la première borne, et une deuxième résistance, un deuxième transistor NMOS et une deuxième diode en série entre les première et quatrième bornes ;
une deuxième branche comprenant un troisième transistor PMOS et une troisième résistance en série entre la deuxième électrode de la première diode et la deuxième borne, et une quatrième résistance, un quatrième transistor NMOS et une troisième diode en série entre les deuxième et quatrième bornes ; et
un circuit de commande configuré, à chaque transmission successivement d'un bit dominant et d'un bit récessif sur le bus par ledit dispositif, pour mettre lesdits transistors à l'état passant pendant toute une première durée débutant avec le bit récessif.

Selon un mode de réalisation :
la première diode a son anode du côté de la troisième borne ;
la deuxième diode a son anode du côté de la première borne ; et
la troisième diode a son anode du côté de la deuxième borne.

Selon un mode de réalisation :
le premier transistor est connecté entre la première diode et
la première résistance, sa source étant par exemple du côté de la première diode ;
le deuxième transistor est connecté entre la deuxième diode et la quatrième borne, sa source étant par exemple du côté de la quatrième borne ;
le troisième transistor est connecté entre la première diode et la troisième résistance, sa source étant par exemple du côté de la première diode ; et
le quatrième transistor est connecté entre la troisième diode et la quatrième borne, sa source étant par exemple du côté de la quatrième borne.

Selon un mode de réalisation, les première, deuxième, troisième et quatrième résistances ont des valeurs de résistance égales ou sensiblement égales, de préférence égales ou sensiblement égales à 100 ohms moins une valeur de résistance à l'état passant des premier, deuxième, troisième et quatrième transistors.

Selon un mode de réalisation, chacun desdits transistors a sa source connectée à sa région de corps.

Selon un mode de réalisation, les premier et troisième transistors sont identiques l'un à l'autre, les deuxième et quatrième transistors étant identiques l'un à l'autre.

Selon un mode de réalisation, chacune des diodes est mise en oeuvre par au moins un transistor MOS connecté en diode.

Selon un mode de réalisation :
la source du premier transistor est connectée à la source du troisième transistor ;
la grille du premier transistor est connectée à la grille du troisième transistor ; et
le circuit de commande comprend :
   - une sixième résistance connectée entre la source et la grille du premier transistor, et
   - une première source de courant configurée pour fournir un courant à la sixième résistance pendant toute la durée de chaque première durée.

Selon un mode de réalisation, le circuit de commande comprend un premier interrupteur ;
la sixième résistance, le premier interrupteur et la première source de courant sont connectés en série et dans cet ordre entre la source du premier transistor et la quatrième borne ; et
le circuit de commande est configuré pour mettre le premier interrupteur à l'état passant pendant toute la durée de chaque première durée.

Selon un mode de réalisation :
les deuxième et quatrième transistors ont leurs sources connectées à la quatrième borne ;
la grille du deuxième transistor est connectée à la grille du quatrième transistor ; et
le circuit de commande comprend :
   - une septième résistance connectée entre la source et la grille du deuxième transistor, et
   - une deuxième source de courant configurée pour fournir un courant à la septième résistance pendant toute la durée de chaque première durée.

Selon un mode de réalisation :
le circuit de commande comprend un deuxième interrupteur ;
la deuxième source de courant, le deuxième interrupteur et la septième résistance sont connectés en série et dans cet ordre entre la source du premier transistor et la quatrième borne ; et
le circuit de commande est configuré pour mettre le deuxième interrupteur à l'état passant pendant toute la durée de chaque première durée.

Selon un mode de réalisation, le circuit de commande comprend une première capacité connectée en parallèle de la sixième résistance, et une deuxième capacité connectée en parallèle de la septième résistance.

Selon un mode de réalisation, le dispositif comprend en outre un circuit de lecture/écriture du bus configuré pour fournir au circuit de commande, à chaque transmission successivement d'un bit dominant et d'un bit récessif sur le bus par ledit dispositif, un signal indiquant le début et la fin de la première durée correspondante.

Un autre mode de réalisation prévoit un réseau comprenant :
un bus bifilaire série ayant une première ligne et une deuxième ligne ; et
une pluralité de dispositifs tels que décrits, chaque dispositif ayant sa première borne connectée à la première ligne et sa deuxième borne connectée à la deuxième ligne.

Un autre mode de réalisation prévoit un véhicule comprenant un tel réseau.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et sous forme de bloc, un exemple d'un système comprenant plusieurs dispositifs connectés à un bus série bifilaire, par exemple un bus FD CAN ;
la figure 2 illustre, par des chronogrammes, les problématiques d'oscillations de signaux transmis sur le bus du système de la figure 1 ;
la figure 3 représente, de manière schématique, un mode de réalisation d'un dispositif permettant la réduction des oscillations de signaux transmis sur un bus du type de celui de la figure 1 ;
la figure 4 représente, de manière schématique, un mode de réalisation d'un circuit du dispositif de la figure 3 ; et
la figure 5 représente, de manière schématique et sous la forme de blocs, un mode de réalisation d'un dispositif destiné à être connecté à un bus du type de celui de la figure 1 et comprenant le dispositif de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les bus CAN FD SIC sont bien connus de la personne du métier et tous les détails de mise en oeuvre de ces bus, par exemple en ce qui concerne les protocoles connus de communication mis en oeuvre sur ces bus, n'ont pas été détaillés, les modes de réalisation décrits étant compatibles avec ces bus connus. De plus, les applications connues, par exemple automobiles, dans lesquelles un bus, par exemple de type CAN FD SIC, peut être mis en oeuvre n'ont pas été détaillées, les modes de réalisation décrits étant compatibles avec ces applications connues.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

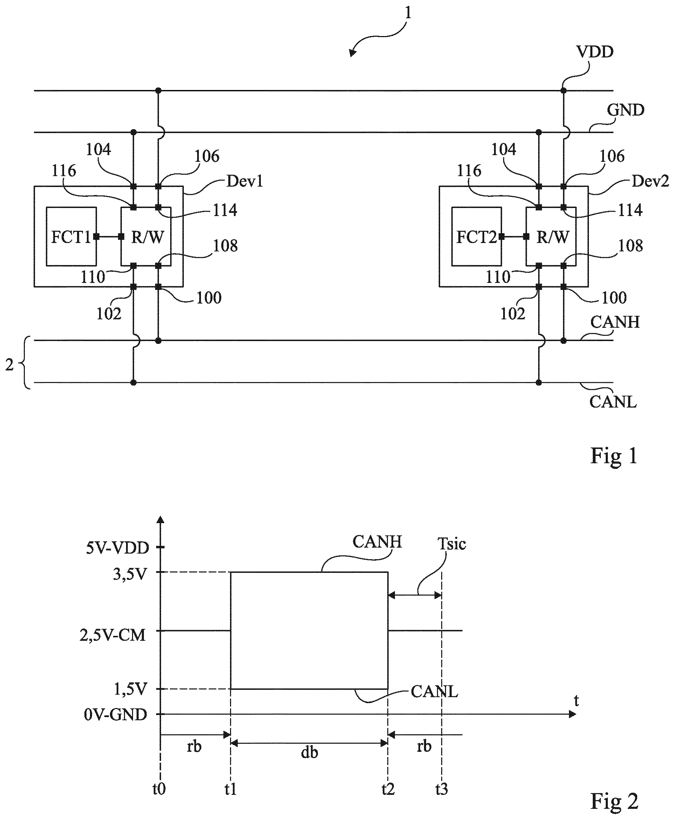

La figure 1 représente, de manière schématique et sous forme de bloc, un exemple d'un système ou réseau 1 comprenant plusieurs dispositifs connectés à un bus série bifilaire 2, par exemple un bus FD CAN. Plus particulièrement, la figure 1 représente une partie seulement de ce système où deux dispositifs Dev1 et Dev2 sont connectés au bus 2, étant entendu que, en pratique, plus de deux dispositifs du type des dispositifs Dev1 et Dev2 peuvent être connectés au bus 2.

Le bus 2 comprend deux lignes conductrices CANH, par exemple dite ligne haute, et CANL, par exemple dite ligne basse. Les signaux transmis sur le bus 2 sont des signaux différentiels pris entre les deux lignes CANH et CANL.

Chacun des dispositifs Dev1 et Dev2 connecté au bus 2 comprend une borne ("terminal" en anglais) 100 connectée à la ligne CANH, et une borne 102 connectée à la ligne CANL du bus. Les dispositifs Dev1, Dev2 connectés au bus 2 sont configurés pour transmettre des bits récessifs et des bits dominants sur le bus 2, correspondant par exemple à des états logiques respectivement '1' et '0'. Lorsqu'un dispositif connecté au bus 2 émet (ou écrit) un bit dominant sur le bus 2, ce bit dominant écrase d'éventuels bits récessifs émis (ou écrits) simultanément sur le bus 2 par d'autres dispositifs connectés au bus.

Chacun des dispositifs Dev1 et Dev2 connecté au bus 2 comprend en outre une borne 104 connectée à un potentiel de référence et une borne 106 connectée à un potentiel d'alimentation, la différence de potentiel entre les bornes 104 et 106 de chaque dispositif permettant d'alimenter le dispositif. Dans l'exemple de la figure 1, tous les dispositifs Dev1, Dev2 connectés au bus 2 ont leur borne 104 connectée à un même potentiel de référence GND, par exemple la masse, et leur borne 106 connectée à un même potentiel d'alimentation VDD. Dans d'autres exemples, deux dispositifs connectés au bus 2 peuvent recevoir des potentiels d'alimentations et/ou des potentiels de référence sensiblement différents entre les deux dispositifs. A titre d'exemple, chaque dispositif Dev1, Dev2 connecté au bus 2 reçoit un potentiel d'alimentation sensiblement égal, par exemple égal, à 5 V sur sa borne 106, ce potentiel étant référencé par rapport au potentiel de masse GND reçu par la borne 104 du dispositif.

Pour écrire et lire des bits sur le bus 2, chacun des dispositifs Dev1 et Dev2 connecté au bus 2 comprend un circuit R/W. Le circuit R/W comprend des bornes 108 et 110 connectées aux bornes respectives 100 et 102 du dispositif auquel il appartient. A titre d'exemple, chaque circuit R/W comprend en outre des bornes 116 et 114 connectées aux bornes respectives 104 et 106 du dispositif auquel il appartient, de sorte à recevoir une tension d'alimentation.

A titre d'exemple, chaque circuit R/W est configuré pour mettre en oeuvre le protocole CAN FD. Par exemple, lorsqu'un dispositif Dev1 ou Dev2 connecté au bus 2 écrit un bit dominant sur le bus, son circuit R/W est configuré pour forcer la ligne CANH à une tension sensiblement égale, par exemple égale, à 3,5 V, et la ligne CANL à une tension sensiblement égale, par exemple égale, à 1,5 V. Par exemple, lorsqu'un dispositif Dev1 ou Dev2 connecté au bus 2 écrit un bit récessif sur le bus, son circuit R/W est configuré pour placer la ligne CANH et la ligne CANL à une tension sensiblement égale, par exemple égale, à la moitié de la tension d'alimentation présente entre les bornes 104 et 106 du dispositif, par exemple à une tension sensiblement égale, par exemple égale, à 2,5 V. A titre d'exemple, chaque circuit R/W comprend une résistance de tirage ("pull-up resistor") connectée entre sa borne CANL et un noeud à une tension sensiblement égale, par exemple égale, à la moitié de la tension entre ses bornes 116 et 114, et une résistance de tirage connectée entre sa borne CANH et ce même noeud. A titre d'exemple, ces résistances de tirage ont une valeur de l'ordre de 35 Kohms.

A titre d'exemple, chaque dispositif Dev1, Dev2 connecté au bus met en oeuvre une ou plusieurs fonctions, représentées schématiquement par un bloc FCT1 pour le dispositif Dev1, et par un bloc FCT2 pour le dispositif Dev2. A titre d'exemple, le bloc FCT1, respectivement FCT2, du dispositif Dev1, respectivement Dev2, est connecté au circuit R/W de ce dispositif, par exemple pour lui fournir des bits à transmettre sur le bus 2 et/ou pour recevoir des bits lus sur le bus 2.

La figure 2 illustre, par des chronogrammes, les problématiques d'oscillations de signaux transmis sur le bus 2 du système 1 de la figure 1. Ainsi, dans l'exemple de la figure 2, le potentiel VDD est sensiblement égal, de préférence égal, 5 V, et le potentiel de référence GND est nul (0 V).

Cette figure 2 illustre l'évolution des tensions sur les lignes CANH et CANL du bus 2 lors de la transmission successive d'un bit récessif rb, d'un bit dominant db, et d'un autre bit récessif rb.

Ainsi, à un instant t0 pendant la transmission d'un bit rb, la tension sur la ligne CANH est sensiblement égale, de préférence égale, à la tension sur la ligne CANL, cette tension étant sensiblement égale, par exemple égale, à 2,5 V dans cet exemple et correspondant au mode commun CM d'un signal transmis sur la paire de lignes CANH et CANL.

A un instant t1 suivant, la transmission du bit rb est terminée et la transmission d'un bit db débute. Le dispositif Dev1 ou Dev2 qui écrit le bit db sur le bus 2 (figure 1) force alors la tension sur la ligne CANH à une valeur sensiblement égale, par exemple égale, à 3,5 V, et la tension sur la ligne CANL à une valeur sensiblement égale, par exemple égale, à 1,5 V.

A un instant suivant t2, la transmission du bit db est terminée et la transmission d'un nouveau bit rb débute. Ainsi, les tensions sur les lignes CANH et CANL sont, au moins en théorie, sensiblement égales l'une à l'autre et à la valeur du mode commun CM. Toutefois, en pratique, en raison de réflexions des signaux sur chacune des lignes CANH et CANL, des oscillations (non représentées en figure 2) se produisent sur chacune des lignes CANH et CANL, d'où il résulte que la tension différentielle entre les lignes CANH et CANL peut prendre des valeurs qui sont interprétées comme correspondant à la transmission d'un bit dominant sur le bus 2.

Il serait donc souhaitable de disposer de dispositifs similaires aux dispositifs Dev1 et Dev2 qui soient destinés à être connectés au bus 2 et qui permettent de réduire, voire de supprimer, les oscillations parasites sur les lignes CANH et CANL qui se produisent à chaque début d'un bit récessif rb suivant immédiatement un bit dominant db.

Par exemple, il serait souhaitable d'avoir un dispositif destiné à être connecté au bus 2 qui permette d'assurer, à chaque transmission par le dispositif sur le bus 2 d'un bit dominant db immédiatement suivi d'un bit récessif rb, une impédance différentielle entre les lignes CANH et CANL de l'ordre de 100 ohms pendant une durée Tsic débutant avec le bit récessif rb, et, en outre une impédance de fin de ligne de l'ordre de 50 ohms sur chacune des lignes CANH et CANL pendant cette durée Tsic. Comme cela est illustré en figure 2 pour le bit rb dont la transmission commence à l'instant t2, la durée Tsic se termine avant la fin de l'émission du bit récessif rb correspondant, par exemple à un instant t3 postérieur à l'instant t2 dans l'exemple de la figure 2.

Par ailleurs, il serait également souhaitable que ce dispositif destiné à être connecté au bus 2 permette de supporter et/ou d'absorber des variations de la valeur du mode CM, ces variations ayant des valeurs pouvant atteindre jusqu'à 40 V ou -40V par rapport au mode commun CM nominal, par exemple, sensiblement égal à 2,5 V.

Il est ici proposé un circuit, ou dispositif, destiné à être implémenté dans un dispositif du type des dispositifs Dev1 et Dev2 décrits précédemment, c'est-à-dire dans un dispositif destiné à être connecté à un bus bifilaire série sur lequel des bits dominants et récessifs sont transmis via la tension différentielle entre les deux lignes du bus. Le dispositif proposé permet de résoudre tout ou partie des inconvénients des dispositifs Dev1 et Dev2 connus destinés à être connectés à un tel bus.

Par exemple, le dispositif proposé permet de mettre en oeuvre, pendant toute la durée de chaque durée Tsic au début d'un bit récessif transmis par le dispositif immédiatement après un bit dominant transmis par ce même dispositif, les valeurs d'impédances différentielle et de fin de ligne données ci-dessus.

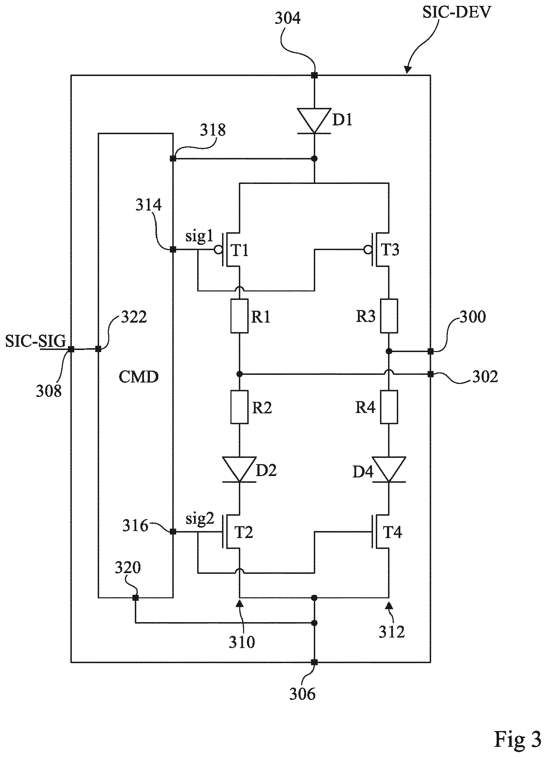

La figure 3 représente, de manière schématique, un mode de réalisation d'un tel dispositif, référencé SIC-DEV en figure 3.

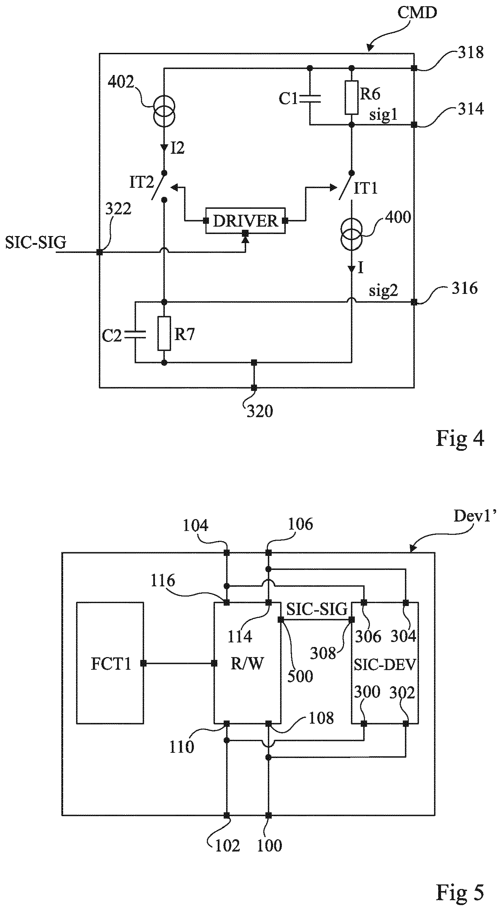

Comme cela est illustré en figure 5, le dispositif SIC-DEV est destiné à faire partie, ou fait partie, d'un dispositif Dev1' similaire aux dispositifs Dev1 et Dev2 décrits précédemment. Ainsi, sauf indication contraire, tous ce qui a été indiqué pour les dispositifs Dev1 et Dev2 s'applique au dispositif Dev1'.

En particulier, le dispositif Dev1' comprend les mêmes bornes 100, 102, 104 et 106 que les dispositifs Dev1 et Dev2.

Le dispositif Dev1' comprend, comme les dispositifs Dev1 et Dev2, un circuit R/W ayant ses bornes 108, 110, 116 et 114 connectées aux bornes 100, 102, 104 et 106 du dispositif Dev1', de la même façon qu'en figure 1 pour les dispositifs Dev1 et Dev2.

Toutefois, par rapport aux circuits R/W décrits en relation avec la figure 1, de préférence le circuit R/W du dispositif Dev1' est en outre configuré pour fournir, à chaque transmission successivement d'un bit dominant et d'un bit récessif sur le bus 2 par le dispositif Dev1', un signal SIC-SIG indiquant le début et la fin de la durée Tsic correspondante. Par exemple, le signal SIC-SIG est un signal binaire dans un premier état binaire pendant chaque durée Tsic, et dans un deuxième état binaire sinon.

De manière similaire aux dispositifs Dev1 et Dev2 précédemment décrits, le dispositif Dev1' comprend un ou plusieurs circuits mettant en oeuvre des fonctionnalités du dispositif Dev1', ces circuits étant représentés sous la forme d'un bloc FCT1 en figure 5. A titre d'exemple, le bloc FCT1 du dispositif Dev1' est connecté au circuit R/W du dispositif Dev1', par exemple pour fournir au circuit R/W des bits à transmettre sur le bus et/ou pour recevoir du circuit R/W des bits lus sur le bus.

Par rapport aux dispositifs Dev1 et Dev2, le dispositif Dev1' comprend en outre le dispositif SIC-DEV.

Comme cela est illustré en figure 3 et en figure 5, le dispositif SIC-DEV comprend une borne 300 destinée à être connectée à la ligne CANL, cette borne 300 étant donc connectée à la borne 102 du dispositif Dev1' en figure 5, et une borne 302 destinée à être connectée à la ligne CANH, cette borne 302 étant donc connectée à la borne 100 du dispositif Dev1' en figure 5.

En outre, le circuit SIC-DEV comprend une borne 304 destinée à être connectée à un potentiel d'alimentation, cette borne 304 étant donc connectée à la borne 106 du dispositif Dev1' en figure 5 pour recevoir le potentiel VDD, et une borne 306 destinée à être connectée à un potentiel de référence, cette borne 306 étant donc connectée à la borne 104 du dispositif Dev1' en figure 5 pour recevoir le potentiel GND.

Selon un mode de réalisation, le dispositif SIC-DEV reçoit, par exemple sur une borne 308, le signal SIC-SIG fourni par le circuit R/W du dispositif Dev1'. Par exemple, la borne 308 du dispositif SIC-DEV est connectée à une borne 500 du circuit R/W, la borne 500 fournissant le signal SIC-SIG.

Comme cela se voit en figure 3, le dispositif SIC-DEV comprend une diode D1 ayant une première électrode, par exemple son anode, connectée à la borne 304, ainsi qu'une première branche 310 et une deuxième branche 312 chacune connectée entre une deuxième électrode de la diode D1, par exemple sa cathode, et la borne 306.

La branche 310 comprend un transistor PMOS T1 et une résistance R1 connectées en série entre la diode D1 et la borne 302. De préférence, la source du transistor T1 est du côté de la diode D1. La branche 310 comprend en outre une résistance R2, un transistor NMOS T2 et une diode D2 connectée en série entre les bornes 302 et 306. De préférence, la source du transistor T2 est du côté de la borne 306.

Par exemple, le transistor T1 est connecté entre la diode D1 et la résistance R1 elle-même connectée à la borne 302, la source du transistor T1 étant connectée à la diode D1. Par exemple, la diode D2 est connectée entre la résistance R2 et le transistor T2, la source du transistor T2 étant du côté de la borne 306, par exemple connectée à la borne 306. La résistance R2 est par exemple connectée à la borne 302.

De manière similaire à la branche 310, la branche 312 comprend un transistor PMOS T3 et une résistance R3 connectées en série entre la diode D1 et la borne 300. De préférence, la source du transistor T3 est du côté de la diode D1. La branche 312 comprend en outre une résistance R4, un transistor NMOS T4 et une diode D4 connectées en série entre les bornes 300 et 306. De préférence, la source du transistor T4 est du côté de la borne 306.

Par exemple, le transistor T3 est connecté entre la diode D1 et la résistance R3 elle-même connectée à la borne 302, la source du transistor T3 étant connectée à la diode D1. Par exemple, la diode D4 est connectée entre la résistance R4 et le transistor T4, la source du transistor T4 étant du côté de la borne 306, par exemple connectée à la borne 306. La résistance R4 est par exemple connecté à la borne 300.

De préférence, l'ordre de connexion du transistor T3 et de la résistance R3 entre la diode D1 et la borne 300 est le même que l'ordre de connexion du transistor T1 et de la résistance R1 entre la diode D1 et la borne 302.

De préférence, l'ordre de connexion de la résistance R4, du transistor T4 et de la diode D4 entre les bornes 300 et 306 est le même que l'ordre de connexion de la résistance R2, du transistor T2 et de la diode D2 entre les bornes 302 et 306.

Les transistors T1 et T3 ont leurs grilles connectées l'une à l'autre et sont donc commandés par un même signal sig1. Les sources des transistors T1 et T3 sont connectées entre elles.

De manière similaire, les transistors T2 et T4 ont leurs grilles connectées l'une à l'autre et sont commandés par un même signal sig2. En outre, lorsque les transistors T2 et T4 sont connectés à la borne 306, ces transistors ont par exemple leurs sources connectées à la borne 306 et l'une à l'autre.

Selon un mode de réalisation, la diode D1 a son anode du côté de la borne 304, par exemple connectée à la borne 304.

Selon un mode de réalisation, la diode D2 de la branche 310 a son anode du côté de la borne 302, par exemple connectée à la résistance R2, et la diode D4 de la branche 312 a son anode du côté de la borne 300, par exemple connectée à la résistance R4.

Selon un mode de réalisation, les résistances R1, R2, R3 et R4 ont des valeurs de résistance sensiblement égales, de préférence égales. Par exemple, les résistances R1 à R4 ont chacune une valeur de résistance sensiblement égale, de préférence égale, à 100 ohms moins la valeur de la résistance à l'état passant des transistors T1 à T4. Par exemple, lorsque les transistors T1 à T4 ont une valeur de résistance à l'état passant égale ou sensiblement égale à 10 ohms, les résistances R1 à R4 ont chacune une valeur de résistance égale ou sensiblement égale à 90 ohms. De préférence, la résistance R1 a une valeur de résistance sensiblement égale, par exemple égale, à 100 ohms moins la valeur de la résistance à l'état passant du transistor T1 avec lequel elle est connectée entre les bornes 304 et 302, la résistance R2 a une valeur de résistance sensiblement égale, par exemple égale, à 100 ohms moins la valeur de la résistance à l'état passant du transistor T2 avec lequel elle est connectée entre les bornes 304 et 300, la résistance R3 a une valeur de résistance sensiblement égale, par exemple égale, à 100 ohms moins la valeur de la résistance à l'état passant du transistor T3 avec lequel elle est connectée entre les bornes 302 et 306, et la résistance R4 a une valeur de résistance sensiblement égale, par exemple égale, à 100 ohms moins la valeur de la résistance à l'état passant du transistor T4 avec lequel elle est connectée entre les bornes 300 et 306.

Selon un mode de réalisation, les transistors T1 et T3 sont identiques l'un à l'autre.

Selon un mode de réalisation, de manière similaire, les transistors T2 et T4 sont identiques l'un à l'autre.

Selon un mode de réalisation, les diodes D1, D2, et D4 sont chacune mise en oeuvre par une ou plusieurs diodes, par exemple par un ou plusieurs transistors MOS chacun monté en diode.

Selon un mode de réalisation, les diodes D2 et D4 sont identiques.

Selon un mode de réalisation, chacun des transistors T1, T2, T3 et T4 a sa source connectée à sa région de corps ("body région" en anglais).

Selon un mode de réalisation, les transistors des branches 310 et 312 sont chacun mis en oeuvre sur un substrat semiconducteur massif ("bulk" en anglais), par exemple en silicium. Toutefois, dans des variantes de réalisation, certains au moins de ces transistors sont mis en oeuvre sur une structure de type SOI ("Semiconductor On Insulator" - semiconducteur sur isolant). A titre d'exemple, lorsque les transistors T1 à T4 sont mis en oeuvre sur SOI, l'ordre de connexion du transistor T1, respectivement T3, et de la résistance R1, respectivement R3, entre la diode D1 et la borne 300, respectivement 302, peut être inversé par rapport à ce qui est illustré en figure 3.

Le dispositif SIC-DEV comprend en outre un circuit de commande CMD. Le circuit CMD est configuré, à chaque transmission successivement d'un bit dominant et d'un bit récessif sur le bus par le dispositif Dev1' comprenant le circuit SIC-DEV, pour mettre les transistors T1, T2, T3 et T4 à l'état passant pendant toute la durée de la durée Tsic correspondante. En dehors de ces durées Tsic, le circuit CMD est configuré pour maintenir les transistors T1 à T4 à l'état bloqué. Ainsi, le circuit CMD fournit les signaux sig1 de commande des transistors T1 et T3, et sig2 de commande des transistors T2 et T4. Par exemple, le circuit CMD comprend une borne 314 configurée pour fournir le signal sig1 et une borne 316 configurée pour fournir le signal sig2.

Selon un mode de réalisation, les sources des transistors T1 et T3 sont connectées l'une à l'autre, et, en outre, à une borne 318 du circuit CMD.

Le circuit CMD a en outre une borne 320 connectée au potentiel de référence, cette borne 320 étant donc connectée à la borne 306 du dispositif SIC-DEV.

Dans le dispositif Dev1' de la figure 5, tout au long de chaque durée Tsic correspondant au début d'un bit récessif émis par le circuit Dev1' immédiatement après l'émission d'un bit dominant par ce même circuit Dev1', les interrupteurs T1, T2, T3 et T4 sont maintenus passants par le circuit CMD. Il en résulte que, lorsque les résistances R1 à R4 ont chacune une valeur sensiblement égale, de préférence égale, à 100 ohms moins la valeur de résistance à l'état passant des interrupteurs T1 à T4, l'impédance différentielle entre les lignes CANH et CANL est sensiblement égale, de préférence égale, à 100 ohms, et chacune des lignes CANH et CANL voit une impédance de fin de ligne sensiblement égale, de préférence égale, à 50 ohms par rapport à son mode commun. Lorsque les interrupteurs T1 à T4 sont maintenus ouverts par le circuit CMD, en dehors de la durée Tsic, le fonctionnement du bus n'est pas modifié par rapport au cas où le dispositif SIC-DEV est absent.

Par ailleurs, la présence de la diode D1 couplant les lignes respectives CANH et CANL au potentiel VDD avec l'anode de la diode D1 du côté du potentiel VDD permet d'absorber les surtensions positives du mode commun de sorte que cette surtension ne s'applique pas au potentiel VDD ou, dit autrement, que le potentiel VDD ne soit pas modifié par cette surtension positive du mode commun. Cela est vrai que les transistors T1 et T3 soient à l'état passant, ou qu'ils soient à l'état bloqué. En effet, dans ce dernier cas, la surtension positive du mode commun des lignes CANH et CANL est propagée dans ces transistors T1 et T3 par l'intermédiaire de leurs diodes de corps ("body diode"). De manière symétrique, la présence dans chacune des branches 310 et 312 d'une diode couplant les lignes respectives CANH et CANL au potentiel GND avec la cathode de la diode du côté du potentiel GND permet d'absorber les surtensions négatives du mode commun de sorte que cette surtension ne s'applique pas au potentiel GND ou, dit autrement, que le potentiel GND ne soit pas modifié par cette surtension négative du mode commun. Cela est vrai que les transistors T2 et T4 soient à l'état passant, ou qu'ils soient à l'état bloqué. En effet, dans ce dernier cas, la surtension négative du mode commun des lignes CANH et CANL est propagée dans ces transistors T2 et T4 par l'intermédiaire de leurs diodes de corps ("body diode").

A titre d'exemple, le circuit CMD commande les interrupteurs T1 à T4 à partir du signal SIC-SIG. Dans ce cas, le circuit CMD comprend une borne 322 connectée à la borne 308 du circuit SIC-DEV, de sorte à recevoir le signal SIC-SIG et à générer les signaux sig1 et sig2 à partir du signal SIC-SIG.

La figure 4 illustre un exemple de mode de réalisation du circuit CMD de la figure 3. Dans l'exemple de la figure 4, le circuit CMD comprend la borne 320 configurée pour être connectée au potentiel de référence GND, et la borne 318 connectée aux sources des transistors T1 et T3 qui sont elles-mêmes connectées à la cathode de la diode D1 (figure 3). Dans cet exemple, la borne 318 reçoit un potentiel qui sert de potentiel d'alimentation local au circuit CMD.

Le circuit CMD comprend la borne 314 configurée pour fournir le signal sig1 de commande des transistors T1 et T3.

Dans ce mode de réalisation, le circuit CMD comprend une résistance R6 connectée entre les bornes 318 et 314, c'est-à-dire entre la source et la grille du transistor T1. Le circuit CMD comprend en outre une source de courant 400. La source de courant 400 est configurée pour fournir, à chaque transmission successivement d'un bit dominant et d'un bit récessif sur le bus par le dispositif Dev1' comprenant le circuit SIC-DEV comprenant lui-même le circuit CMD, un courant I à la résistance R6 pendant la durée Tsic correspondante, c'est-à-dire pendant toute cette durée Tsic. De plus, la source 400 est configurée pour ne pas fournir le courant I en dehors de ces durées Tsic. De préférence, la source de courant 400 a une borne connectée à la borne 320 du circuit CMD et une borne couplée à la résistance R6, plus particulièrement la borne de la résistance R6 connectée à la borne 314.

Ainsi, pendant chaque durée Tsic, la résistance R6 présente une tension non nulle à ses bornes qui est suffisante pour rendre passant les transistors T1 et T3. Le choix de la valeur de résistance de la résistance R6 et de la valeur du courant I pour obtenir ce fonctionnement est à la portée de la personne du métier.

Selon un mode de réalisation, pour que la source 400 ne délivre le courant I à la résistance R6 que pendant les durées Tsic, le circuit de commande CMD comprend un interrupteur IT1 connecté entre la source de courant 400 et la résistance R6 (borne 314), et le circuit CMD est configuré pour mettre cet interrupteur IT1 à l'état passant pendant toute la durée de chaque durée Tsic, et à l'état bloqué sinon. Dit autrement, la résistance R6, l'interrupteur IT1 et la source de courant 400 sont connectés en série, dans cet ordre, entre les bornes 318 et 320.

A titre d'exemple, le circuit CMD comprend un circuit DRIVER configuré pour commander l'interrupteur IT1 de la manière décrite ci-dessus. Selon un mode de réalisation, le circuit DRIVER a une borne connectée à la borne 322 pour recevoir le signal SIC-SIG, le circuit DRIVER commandant alors l'interrupteur IT1 à partir du signal SIC-SIG.

Selon une variante de réalisation, la source de courant 400 est configurée pour être sélectivement éteinte ou allumée par le circuit CMD, par exemple par le circuit DRIVER, par exemple sur la base du signal SIC-SIG. Le circuit CMD n'active alors la source 400 que pendant les durées Tsic, et, en outre, l'interrupteur IT1 est omis.

Le circuit CMD comprend en outre la borne 316 configurée pour fournir le signal sig2 de commande des transistors T2 et T4.

Du fait que les transistors T2 et T4 ont leurs sources connectées au potentiel GND (figure 3), la mise en oeuvre dans le circuit CMD d'un circuit générant le signal sig2, par exemple à partir du signal SIC-SIG, est à la portée de la personne du métier.

Toutefois, il est préférable d'avoir un comportement équilibré, c'est-à-dire une correspondance ("matching" en anglais), entre la commande sig1 des transistors T1 et T3, et la commande sig2 des transistors T2 et T4. En effet, une telle correspondance entre les commandes sig1 et sig2 permet que chaque commutation à l'état passant, respectivement bloqué, de chaque transistor T1, T2, T3, T4 soit simultanée des commutations à l'état passant, respectivement bloqué, des autres transistors, d'où il résulte que ces commutations des transistors T1 à T4 ne perturbent pas la valeur du mode commun.

Ainsi, selon un mode de réalisation, comme cela est illustré en figure 4, le circuit CMD comprend, entre les bornes 318, 320 et 316, une structure pour générer le signal sig2 qui est complémentaire (ou symétrique) de la structure entre les bornes respectives 320, 318 et 314.

Plus particulièrement, le circuit CMD comprend une résistance R7 connectée entre les bornes 320 et 316, c'est-à-dire entre la source et la grille du transistor T2. Le circuit CMD comprend en outre une source de courant 402. La source de courant 402 est configurée pour fournir, à chaque transmission successivement d'un bit dominant et d'un bit récessif sur le bus par le dispositif Dev1' comprenant le circuit SIC-DEV comprenant lui-même le circuit CMD, un courant I2 à la résistance R7 pendant toute la durée Tsic correspondante. De plus, la source 402 est configurée pour ne pas fournir le courant I2 à la résistance R7 en dehors de ces durées Tsic. De préférence, la source de courant 402 a une borne connectée à la borne 318 du circuit CMD et une borne couplée à la résistance R7, plus particulièrement la borne de la résistance R7 connectée à la borne 316.

Ainsi, pendant chaque durée Tsic, la résistance R7 présente une tension non nulle à ses bornes qui est suffisante pour rendre passant les transistors T2 et T4. Le choix de la valeur de résistance de la résistance R7 et de la valeur du courant I2 pour obtenir ce fonctionnement est à la portée de la personne du métier.

En particulier, la personne du métier est en mesure de prévoir des valeurs de courants I et I2 et de résistances R6 et R7 qui permettent que la tension aux bornes de la résistance R6 et la tension aux bornes de la résistance R7 présentent des valeurs identiques, par exemple en choisissant une même valeur pour les courants I et I2 et une même valeur de résistance pour les résistances R6 et R7.

Selon un mode de réalisation, bien que cela ne soit pas illustré, le circuit CMD (ou le circuit SIC-DEV auquel il appartient) comprend un circuit d'étalonnage des valeurs des courants I et I2, de sorte que, pendant une phase d'étalonnage, les valeurs des courants I et I2 sont choisies pour avoir une commande sig1 des transistors T1 et T3 qui soit équilibrée avec la commande sig2 des transistors T2 et T4.

Selon un mode de réalisation dans lequel le circuit CMD comprend l'interrupteur IT1, pour que la source 400 ne délivre le courant I2 que pendant les durées Tsic, le circuit de commande CMD comprend un interrupteur IT2 connecté entre la source de courant 402 et la résistance R7 (borne 316), et le circuit CMD est configuré pour mettre cet interrupteur IT2 à l'état passant pendant toute la durée de chaque durée Tsic, et à l'état bloqué sinon. Dit autrement, la résistance R7, l'interrupteur IT2 et la source de courant 402 sont connectés en série, dans cet ordre, entre les bornes 318 et 320.

A titre d'exemple, le circuit DRIVER est configuré pour commander l'interrupteur IT2 de la manière décrite ci-dessus, par exemple à partir du signal SIC-SIG.

Selon une variante de réalisation dans laquelle la source 400 est configurée pour être sélectivement éteinte ou allumée par le circuit CMD et l'interrupteur IT1 est omis, la source 402 est également configuré pour être sélectivement éteinte ou allumée par le circuit CMD, par exemple par le circuit DRIVER, et l'interrupteur IT2 est omis.

Selon un mode de réalisation dans lequel la structure du circuit CMD connectée entre les bornes 318, 314 et 320 pour générer le signal sig1 est complémentaire de la structure du circuit CMD connectée entre les bornes 320, 316 et 318 pour générer le signal sig2, afin d'améliorer la correspondance entre les commandes sig1 et sig2, une capacité C1 est connectée en parallèle de la résistance R6, et une capacité C2, de préférence de même valeur que la capacité C1, est connectée en parallèle de la résistance R7.

Des modes de réalisation et variantes ont été décrits ci-dessus en relation avec les figures 3 à 5. Bien que cela ne soit pas illustré par une figure, un mode de réalisation prévoit un système ou réseau similaire à celui de la figure 1, à la différence que tous les dispositifs connectés au bus 2 sont remplacés par des dispositifs Dev1'.

En outre, bien que cela ne soit pas illustré par une figure, un autre mode de réalisation prévoit un véhicule, par exemple une automobile, comprenant un tel réseau.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

En particulier, on a décrit des modes de réalisation dans lesquels on vise une valeur de résistance de fin de ligne de 50 ohms pour chacune des lignes CANH et CANL, ainsi qu'une impédance différentielle de 100 ohms entre les lignes CANH et CANL, et les résistances R1 à R4 ont alors une valeur sensiblement égale à 100 ohms moins la valeur de la résistance à l'état passant des interrupteurs T1 à T4. Toutefois, la personne du métier sera en mesure d'adapter la valeur des résistances R1 à R4 à des modes de réalisation où l'on souhaiterait des valeurs différentes de résistance de fin de ligne et de résistance différentielle.

En outre, bien que l'on ait décrit des modes de réalisation adaptés à un bus CAN FD, les modes de réalisation décrits s'appliquent également à un bus CAN XL, et, plus généralement à des bus bifilaires série configurés pour transmettre des bits dominants et des bits récessifs par l'intermédiaire d'une tension différentielle entre les lignes conductrices du bus.

Enfin, la mise en oeuvre pratique des modes de réalisation et variantes décrits est à la portée de la personne du métier à partir des indications fonctionnelles données ci-dessus.

## Revendications

1. Dispositif (SIC-DEV ; Dev1') comprenant :
des première et deuxième bornes (302, 300) destinées à être connectées respectivement à des première et deuxième lignes (CANH, CANL) d'un bus bifilaire (2) ;
des troisième et quatrième bornes (304, 306) destinées à être connectées respectivement à des potentiels d'alimentation et de référence (VDD, GND) ;
une première diode (D1) ayant une première électrode connectée à la troisième borne (304) ;
une première branche (310) comprenant un premier transistor PMOS (T1) et une première résistance (R1) en série entre une deuxième électrode de la première diode (D1) et la première borne (302), et une deuxième résistance (R2), un deuxième transistor NMOS (T2) et une deuxième diode (D2) en série entre les première et quatrième bornes (302, 306) ; une deuxième branche (312) comprenant un troisième transistor PMOS (T3) et une troisième résistance (R3) en série entre la deuxième électrode de la première diode (D1) et la deuxième borne (300), et une quatrième résistance (R4), un quatrième transistor NMOS (T4) et une troisième diode (D4) en série entre les deuxième et quatrième bornes (300, 306) ; et
un circuit de commande (CMD) configuré, à chaque transmission successivement d'un bit dominant (db) et d'un bit récessif (rb) sur le bus (2) par ledit dispositif (Dev1'), pour mettre lesdits transistors (T1, T2, T3, T4) à l'état passant pendant toute une première durée (Tsic) débutant avec le bit récessif (rb).

2. Dispositif selon la revendication 1, dans lequel :
la première diode (D1) a son anode du côté de la troisième borne (304) ;
la deuxième diode (D2) a son anode du côté de la première borne (302) ; et
la troisième diode (D4) a son anode du côté de la deuxième borne (300).

3. Dispositif selon la revendication 1 ou 2, dans lequel :
le premier transistor (T1) est connecté entre la première diode (D1) et la première résistance (R1), sa source étant par exemple du côté de la première diode (D1) ;
le deuxième transistor (T2) est connecté entre la deuxième diode (D2) et la quatrième borne (306), sa source étant par exemple du côté de la quatrième borne (306) ;
le troisième transistor (T3) est connecté entre la première diode (D1) et la troisième résistance (R3), sa source étant par exemple du côté de la première diode (D1) ; et
le quatrième transistor (T4) est connecté entre la troisième diode (D4) et la quatrième borne (306), sa source étant par exemple du côté de la quatrième borne.

4. Dispositif selon l'une quelconque des revendications 1 à 3, dans lequel les première, deuxième, troisième et quatrième résistances (R1, R2, R3, R4) ont des valeurs de résistance égales ou sensiblement égales, de préférence égales ou sensiblement égales à 100 ohms moins une valeur de résistance à l'état passant des premier, deuxième, troisième et quatrième transistors (T1, T2, T3, T4).

5. Dispositif selon l'une quelconque des revendications 1 à 4, dans lequel chacun desdits transistors (T1, T2, T3, T4) a sa source connectée à sa région de corps.

6. Dispositif selon l'une quelconque des revendications 1 à 5, dans lequel les premier et troisième transistors (T1, T3) sont identiques l'un à l'autre, les deuxième et quatrième transistors (T2, T4) étant identiques l'un à l'autre.

7. Dispositif selon l'une quelconque des revendications 1 à 6, dans lequel chacune des diodes (D1, D2, D4) est mise en oeuvre par au moins un transistor MOS connecté en diode.

8. Dispositif selon l'une quelconque des revendications 1 à 7, dans lequel :
la source du premier transistor (T1) est connectée à la source du troisième transistor (T3) ;
la grille du premier transistor (T1) est connectée à la grille du troisième transistor (T3) ; et
le circuit de commande (CMD) comprend :
- une sixième résistance (R6) connectée entre la source et la grille du premier transistor (T1), et
- une première source de courant (400) configurée pour fournir un courant (I) à la sixième résistance (R6) pendant toute la durée de chaque première durée (Tsic).

9. Dispositif selon la revendication 8, dans lequel le circuit de commande (CMD) comprend un premier interrupteur ;
la sixième résistance (R6), le premier interrupteur (IT1) et la première source de courant (400) sont connectés en série et dans cet ordre entre la source du premier transistor (T1, 318) et la quatrième borne (306) ; et
le circuit de commande est configuré pour mettre le premier interrupteur (IT1) à l'état passant pendant toute la durée de chaque première durée (Tsic).

10. Dispositif selon la revendication 8 ou 9, dans lequel :
les deuxième et quatrième transistors (T2, T4) ont leurs sources connectées à la quatrième borne (306) ;
la grille du deuxième transistor (T2) est connectée à la grille du quatrième transistor (T4) ; et
le circuit de commande (CMD) comprend :
- une septième résistance (R7) connectée entre la source et la grille du deuxième transistor (T2), et
- une deuxième source de courant (402) configurée pour fournir un courant (I2) à la septième résistance (R7) pendant toute la durée de chaque première durée (Tsic).

11. Dispositif selon la revendication 10 prise dans sa dépendance à la revendication 9, dans lequel :
le circuit de commande (CMD) comprend un deuxième interrupteur (IT2) ;
la deuxième source de courant (402), le deuxième interrupteur (IT2) et la septième résistance (R7) sont connectés en série et dans cet ordre entre la source du premier transistor (T1, 318) et la quatrième borne (306) ; et
le circuit de commande (CMD) est configuré pour mettre le deuxième interrupteur (IT2) à l'état passant pendant toute la durée de chaque première durée (Tsic).

12. Dispositif selon la revendication 10 ou 11, dans lequel le circuit de commande (CMD) comprend une première capacité (C1) connectée en parallèle de la sixième résistance (R6), et une deuxième capacité (C2) connectée en parallèle de la septième résistance (R7).

13. Dispositif selon l'une quelconque des revendications 1 à 12, dans lequel le dispositif (Dev1') comprend en outre un circuit de lecture/écriture (R/W) du bus (2) configuré pour fournir au circuit de commande (CMD), à chaque transmission successivement d'un bit dominant (db) et d'un bit récessif (rb) sur le bus (2) par ledit dispositif (Dev1'), un signal (SIC-SIG) indiquant le début et la fin de la première durée (Tsic) correspondante.

14. Réseau comprenant :
un bus bifilaire série (2) ayant une première ligne (CANH) et une deuxième ligne (CANL) ; et
une pluralité de dispositifs selon l'une quelconque des revendications 1 à 13, chaque dispositif ayant sa première borne (302) connectée à la première ligne (CANH) et sa deuxième borne (300) connectée à la deuxième ligne (CANL).

15. Véhicule comprenant un réseau selon la revendication 14.
